(19) Europäisches Patentamt
European Patent Office
Office européen des brevets

(11) **EP 2 851 809 A2**

(12) **EUROPEAN PATENT APPLICATION**

(43) Date of publication:
**25.03.2015 Bulletin 2015/13**

(51) Int Cl.:
***G06F 17/28*** *(2006.01)*

(21) Application number: **14185518.9**

(22) Date of filing: **19.09.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **19.09.2013 JP 2013194640**

(71) Applicant: **Kabushiki Kaisha Toshiba
Tokyo 105-8001 (JP)**

(72) Inventor: **Sonoo, Satoshi
Minato-ku, Tokyo 105-8001 (JP)**

(74) Representative: **Granleese, Rhian Jane
Marks & Clerk LLP
90 Long Acre
London WC2E 9RA (GB)**

(54) **Machine translation apparatus and method**

(57) According to an embodiment, a machine translation apparatus for translating an original language into an object language via an interlanguage includes following units. The analysis unit (102) analyzes an original sentence of the original language to generate analysis information. The storage unit (104) stores a selection model obtained by modeling characteristics of translation from the original language into interlanguage candidates. The interlanguage selection unit (103) selects the interlanguage from the interlanguage candidates based on the analysis information and selection model. The translation controller (107) generates an object language sentence obtained by translating the original sentence into the object language via the interlanguage.

FIG. 1

EP 2 851 809 A2

**Description**

FIELD

Embodiments described herein relate generally to a machine translation apparatus and method that mechanically translate an original language sentence into an object language sentence via translation based on an interlanguage.

BACKGROUND

Recently, the machine translation technique for translating a sentence of a natural language (original language) to a sentence of another natural language (object language) by use of a computer has been developed and widely used. There is a broad range of languages for translation. Therefore, a multi-language translation system that realizes translations between languages is proposed. In the multi-language translation system, it requires a significant amount of development costs to develop a translation engine for every language, and it is not efficient. Under this context, an interlanguage system for first translating an original language into an interlanguage and then translating the interlanguage into an object language is proposed.

In the conventional interlanguage system, a preset natural language (for example, English) is used as an interlanguage. In this case, information held in the original sentence of the original language may be lost at the time of translation from the original language into the interlanguage. For example, it is assumed that Japanese is used as the original language, English is used as the interlanguage, German is used as the object language, and Japanese is translated into English and then translated into German. When a Japanese sentence "ハンス、お元気ですか？" ('Hansu, ogenkidesuka?')" is translated into English, an English sentence "How are you, Hans?" is obtained, and when the English sentence "How are you, Hans?" is translated into German, "Wie geht's dir, Hans?" is obtained. In this example, the nuance of polite expression contained in the Japanese sentence, that is to say a part of the information held in the original language sentence, is lost at the time of translation into English or an interlanguage and the above nuance is not reflected in the sentence of German that is the final object language. As a German sentence corresponding to the Japanese sentence "ハンス、お元気ですか？", the politer expression of "Wie geht's Ihnen, Hans?" is more appropriate.

As described above, in the conventional interlanguage system, a part of the information held in the original language sentence may be lost in some cases at the time of translation into the interlanguage and a problem of a decline in translation accuracy may occur. In the machine translation technique, it is required to make a highly accurate translation even when the interlanguage system is used.

BRIEF DESCRIPTION OF THE DRAWINGS

FIG. 1 is a block diagram schematically showing a machine translation apparatus according to an embodiment.
FIG. 2 is a diagram showing an example of the result of analysis conducted by an original sentence analysis unit shown in FIG. 1.
FIG. 3 is a diagram showing an example of a selection model stored in a selection model storage unit shown in FIG. 1.
FIG. 4 is a diagram showing an example in which an output unit shown in FIG. 1 displays the translation result on a display device.
FIG. 5 is a diagram showing another example in which the output unit shown in FIG. 1 displays the translation result on the display device.
FIG. 6 is a diagram showing still another example in which the output unit shown in FIG. 1 displays the translation result on the display device.
FIG. 7 is a flowchart showing an example of a machine translation process according to the embodiment.
FIG. 8 is a flowchart showing an example of an interlanguage selection process according to the embodiment.

DETAILED DESCRIPTION

In general, according to an embodiment, a machine translation apparatus for translating an original language into an object language via an interlanguage includes an input unit, an analysis unit, a storage unit, an interlanguage selection unit, a translation controller, and an output unit. The input unit is configured to input an original sentence of the original language. The analysis unit is configured to analyze the original sentence to generate analysis information. The storage unit is configured to store a selection model obtained by modeling characteristics of translation from the original language into a plurality of interlanguage candidates. The interlanguage selection unit is configured to select the interlanguage from the plurality of interlanguage candidates based on the analysis information and the selection model. The translation controller is configured to generate an object language sentence obtained by translating the original sentence into the object language via the interlanguage. The output unit is configured to output the object language sentence.

Various embodiments are explained hereinafter with reference to the accompanying drawings. The embodiments are directed to machine translation apparatuses which mechanically translate an original language into an object language via an interlanguage. In the embodiments, a case wherein the original language is Japanese and the object language is German is explained. The combination of the original language and object language is not limited to the example explained here and two given natural languages can be freely combined.

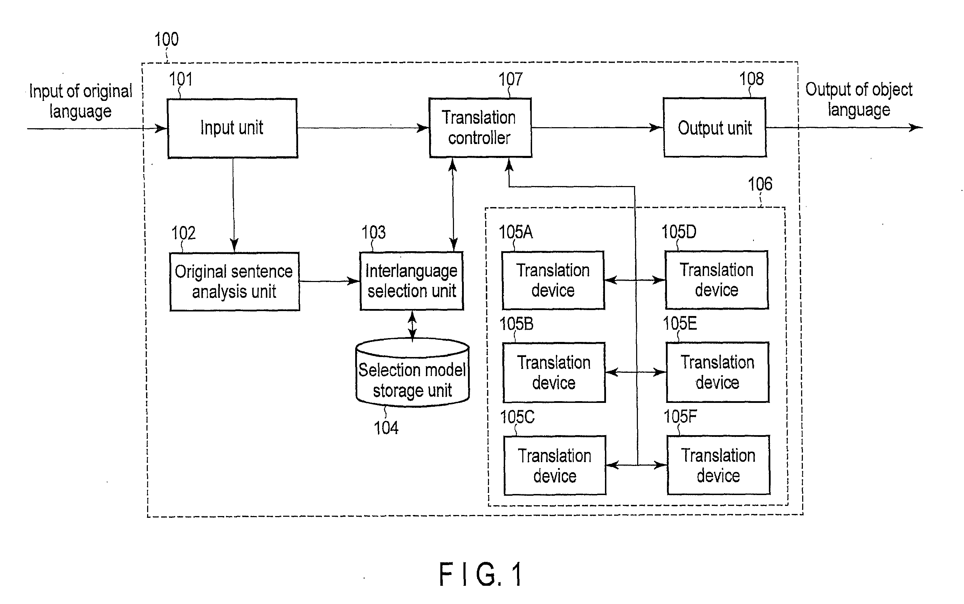

FIG. 1 schematically shows a machine translation apparatus 100 according to an embodiment. As shown in FIG. 1, the machine translation apparatus 100 includes an input unit 101, an original sentence analysis unit (simply referred to as an analysis unit, hereinafter) 102, an interlanguage selection unit 103, a selection model storage unit (simply referred to as a storage unit, hereinafter) 104, a translation engine unit 106, a translation controller 107, and an output unit 108.

The translation engine unit 106 includes translation devices (also called translation engines) 105. Each translation device 105 translates a natural language into another natural language. In the present embodiment, the translation engine unit 106 includes six translation devices 105A, 105B, 105C, 105D, 105E, and 105F. The translation device 105A executes a translation from Japanese into English. The translation device 105B executes a translation from Japanese into Chinese. The translation device 105C executes a translation from Japanese into Korean. The translation device 105D executes a translation from English into German. The translation device 105E executes a translation from Chinese into German. The translation device 105F executes a translation from Korean into German.

In the present embodiment in which the translation devices 105A to 105F can be used, English, Chinese and Korean can be used as the interlanguage at the time of translation from Japanese into German. In the following description, a natural language that can be used as the interlanguage is called an interlanguage candidate. That is, in the embodiment, English, Chinese and Korean are used as the interlanguage candidates.

The translation device 105, which corresponds to one or each of the translation devices 105A to 105F, performs a machine translation. As the machine translation, rule based machine translation, example based machine translation, statistical machine translation and the like that are conventionally known, can be appropriately used. The above translations are generally widely known and a detailed explanation is therefore omitted. The translation device 105 may be realized by translation based on a human translation.

The input unit 101 receives input of the original sentence of the original language and temporarily stores the original sentence. The original sentence of the original language may be listed as the original language sentence. The input original sentence is transmitted to the analysis unit 102 and the translation controller 107.

The analysis unit 102 analyzes the original sentence received from the input unit 101 to generate analysis information. For example, the analysis is realized by use of a morphological analyzer that separates the original sentence into morphemes and obtains part of speech attributes of the morphemes, a syntactic analyzer that attains the grammatical relationship of the original sentence by using syntagmatic analysis, dependency structure analysis, or the like. The analyzing methods are generally widely known, and therefore a detailed explanation thereof is omitted. The analysis may be realized by use of another given analyzing method.

The analysis information contains information concerning at least one original sentence feature. Examples of the original sentence feature contain the sentence type, tense, voice, honorific expression, ambiguity of words, sentence structure, character type and the like of the original sentence. As one example, the sentence type can be classified into three types; a declarative sentence, an interrogative sentence, or an imperative sentence. In this case, the analysis information contains information indicating the sentence type of a declarative, an interrogative, or an imperative sentence in which the original sentence is written.

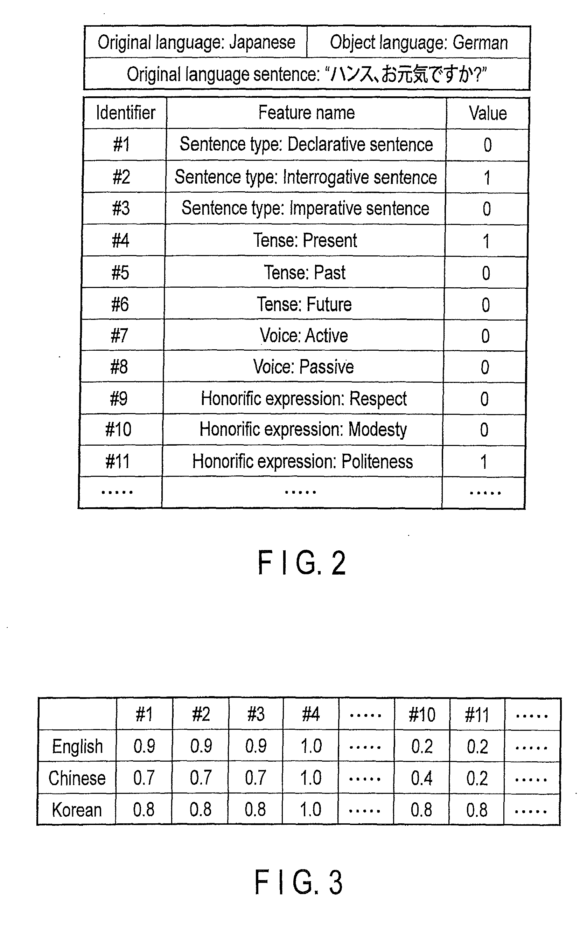

FIG. 2 shows the result of analysis obtained by the analysis unit 102. Specifically, FIG. 2 shows the result of analysis of the original sentence of (Japanese sentence) "ハンス、お元気ですか？". In FIG. 2, feature names used for identifying original sentence features and values assigned to the original sentence features are shown. When the original sentence contains an applicable original sentence feature, a value "1" is assigned, otherwise a value "0" is assigned. In this example, for simplifying the explanation, identifiers are attached to the respective feature names. In the following description, the original sentence feature of identifier #i is entered as original sentence feature #i. In this case, i is an integral number not smaller than 1 and not larger than N and N indicates the number of original sentence features. For example, original sentence feature #1 indicates whether or not the sentence type of the original sentence is a declarative sentence. When the original sentence is described in a declarative sentence form, the value "1" is assigned to original sentence feature #1.

In the example of FIG. 2, the fact that the sentence type is an interrogative sentence, the tense is a present tense and the honorific expression is a polite expression is obtained as the result of analysis of the Japanese sentence "ハンス、お元気ですか？". Therefore, the value "1" is assigned to original sentence features #2, #4, #11 and the value "0" is assigned to the other original sentence features.

The values assigned to the original sentence features are not limited to an example of binary values as shown in FIG. 2, and may be real numbers. Furthermore, a character string may be assigned to an original sentence feature. In an example having the sentence type of original sentence feature #1, the value "0" or character string "declarative sentence" may be assigned if the sentence type is a declarative sentence, the value "1" or character string "interrogative sentence" may be assigned if the sentence type is an interrogative sentence and the value "2" or character string "imperative sentence" may be assigned if the sentence type is an imperative sentence.

The example in which the original sentence as shown in FIG. 2 is analyzed in the sentence unit is not limited, and the analysis may be made in the given clause unit or given morpheme unit (partial series of morphemes).

The storage unit 104 stores a selection model obtained by modeling characteristics of translation from the original language into interlanguage candidates. The characteristic of translation indicates the degree to which the original sentence feature can be transmitted when a certain natural language is translated into another natural language, and can be expressed by use of the transmission coefficient with respect to the original sentence feature. In the present embodiment, the selection model contains the transmission coefficients with respect to the original sentence features for the respective interlanguage candidates.

FIG. 3 shows an example of a selection model according to the present embodiment. The selection model shown in FIG. 3 contains the transmission coefficients with respect to the original sentence features for English, Chinese and Korean. The original sentence features of the selection model are set in correspondence to the original sentence features of analysis information. That is, an identifier shown in FIG. 3 corresponds to the identifier shown in FIG. 2. For example, original sentence feature #11 indicates whether the honorific expression is a polite expression or not.

In the example of FIG. 3, the transmission coefficient for original sentence feature #11 is set at 0.2 in the case of English, 0.2 in the case of Chinese, and 0.8 in the case of Korean. The reason why the transmission coefficient for original sentence feature #11 is set at a small value in the cases of English and Chinese is that expressions corresponding to honorific expressions are not present in the English and Chinese languages. On the other hand, the reason why the transmission coefficient for original sentence feature #11 is set at a large value in the case of Korean is that honorific expressions similar to those of Japanese are present in the Korean language, and the Korean language can sufficiently faithfully transmit honorific expressions contained in the original sentence.

If the selection model can express the transmission coefficients for the original sentence features, the form thereof can be freely set. For example, an evaluation set of original language sentences containing a specified original sentence feature is prepared, and the translation accuracy with respect to the interlanguage candidate may be set as the transmission coefficient. The translation accuracy can be quantified based on a machine evaluation or manual evaluation. The machine evaluation can be performed based on an evaluation method such as BLEU (Bilingual Evaluation Understudy), which is a machine evaluation method for measuring the correspondence degree with respect to a reference translated sentence, NIST (National Institute of Standards and Technology) or WER (Word Error Rate).

The interlanguage selection unit 103 selects an interlanguage used for translation from interlanguage candidates based on the analysis information generated from the analysis unit 102 and the selection model stored in the storage unit 104. Specifically, the interlanguage selection unit 103 calculates scores of the respective interlanguage candidates based on the analysis information and selection model and selects the interlanguage candidate having the largest score as an interlanguage used for translation. The score in the present embodiment indicates the appropriateness as the interlanguage. Thus, in the present embodiment, interlanguages used for translation are switched according to the input original sentence. Therefore, it becomes possible to transmit information held in the original sentence to a translated sentence and, as a result, the translation accuracy can be enhanced.

The translation controller 107 communicates with the translation engine unit 106 including the translation devices 105. The translation controller 107 controls the translation engine unit 106 to generate an object language sentence (that is, a translated sentence) obtained by translating the original sentence received from the input unit 101 into an object language via the interlanguage selected by the interlanguage selection unit 103. Specifically, the translation engine unit 106 translates the original sentence into an object language by use of a combination of the translation device 105 that translates the original language into a selected interlanguage and the translation device 105 that translates the selected interlanguage into the object language. The thus generated object language sentence is supplied to the output unit 108.

The translation engine unit 106 is not limited to an example in which it is mounted on the machine translation apparatus 100, and may be provided on the exterior of the machine translation apparatus 100. If the translation engine unit 106 is provided on the exterior of the machine translation apparatus 100, it may be realized by a translation service on the Web, for example. In this case, the translation controller 107 communicates with the translation engine unit 106 via a communication network such as the Internet and requests the translation engine unit 106 to make a translation via translation based on the interlanguage selected by the interlanguage selection unit 103.

The output unit 108 presents the object language sentence generated from the translation controller 107 to the user. The output unit 108 can present comment information including the original language sentence, interlanguage sentence, and a message that indicates whether analysis information is reflected or not, together with the object language sentence. The interlanguage sentence is an intermediate translated sentence obtained by translating the original sentence into a selected interlanguage. For example, presentation of the object language sentence may be performed by any one of methods for image outputting by use of a display device (not shown), print outputting by use of a printer device (not shown), speech outputting by use of a speech synthesizing device and the like. Also, the above outputting methods are previously incorporated, the outputting methods can be interchangeably used as required, and two or more outputting methods can be used in combination.

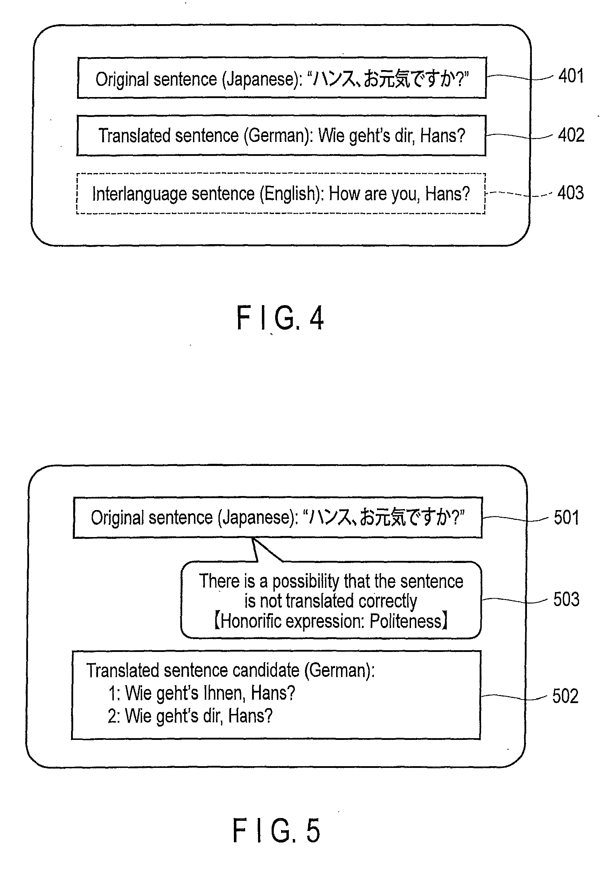

FIG. 4 shows an example of a display screen when the output unit 108 outputs an object language sentence to the display device. As shown in FIG. 4, the display screen includes a field 401 that displays an input original sentence, a field 402 that displays the object language sentence, and a field 403 that displays an interlanguage sentence.

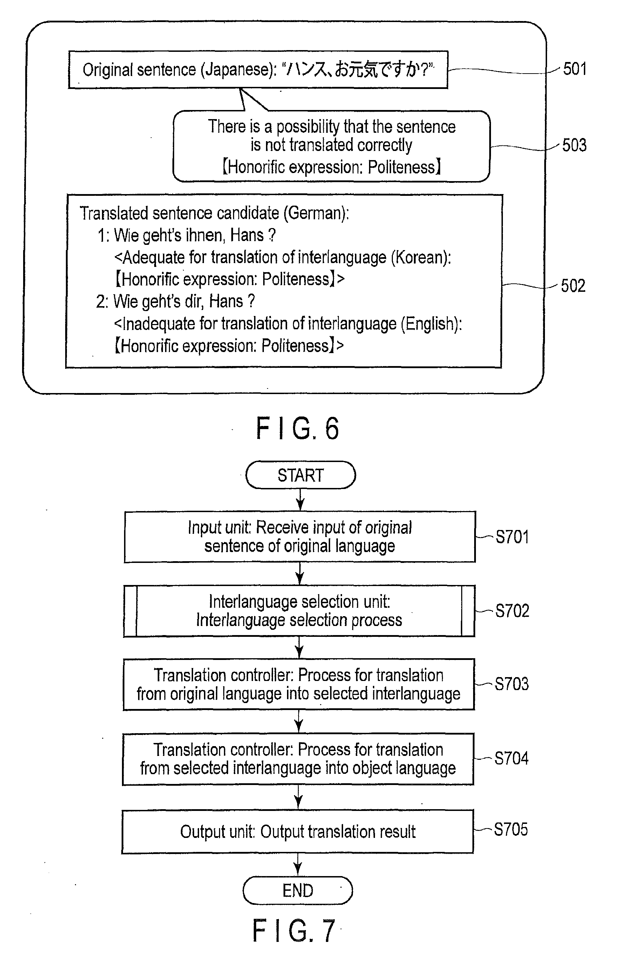

FIG. 5 shows another example of the display screen when the output unit 108 outputs the object language sentence to the display device. As shown in FIG. 5, the display screen includes a field 501 that displays the input original sentence, a field 502 that displays the translation result, and a field 503 that displays a message. In an example of FIG. 5, the message displayed in the field 503 indicates the possibility that the honorific expression of the original sentence is not reflected in the translated sentence. For example, the message is presented when the analysis unit 102 determines that the honorific expression is contained in the original sentence, but the transmission coefficient with respect to the honorific expression in the selected interlanguage is lower than a threshold value. In such a case, the interlanguage selection unit 103 may select a plurality of interlanguages, the translation controller 107 may generate object language sentences corresponding to the interlanguages, and the output unit 108 can display the object language sentences as translation candidates in the field 502. The translation candidates are rearranged and displayed in the order in which the scores calculated by the interlanguage selection unit 103 are higher. In addition, as shown in FIG. 6, interlanguages used for acquiring the translation candidates may be displayed in correspondence to the translation candidates, and information indicating the propriety of a message displayed in the field 503 may be displayed in the field 502.

The machine translation apparatus 100 according to the present embodiment selects an interlanguage from interlanguage candidates based on the analysis result of the original sentence and the selection model. Therefore, a translation can be executed by use of an interlanguage suitable for translation of the original sentence. As a result, a highly accurate translation can be executed even if a translation device that executes a translation from the original language into the object language, a translation dictionary between the original language and the object language, and a linguistic knowledge of the object language cannot be utilized.

Next, the machine translation process of the machine translation apparatus 100 is explained.

FIG. 7 shows the procedure of the machine translation process according to the present embodiment. In step S701 of FIG. 7, the input unit 101 receives input of the original sentence expressed by an original language. In step S702, the interlanguage selection unit 103 selects an interlanguage used for translation of the original sentence from interlanguage candidates by an interlanguage selection process. The interlanguage selection process will be described in detail later.

In step S703, the translation controller 107 supplies the original sentence to the translation device 105 that translates the original language into the selected interlanguage and acquires an interlanguage sentence from this translation device 105. In step S704, the translation controller 107 supplies the interlanguage sentence to the translation device 105 that translates the selected interlanguage into an object language and acquires an object sentence from this translation device 105.

In step S705, the output unit 108 outputs the object language sentence acquired by the translation controller 107. For example, the object language sentence is displayed on the display screen of the display device. As a result, the machine translation process is terminated.

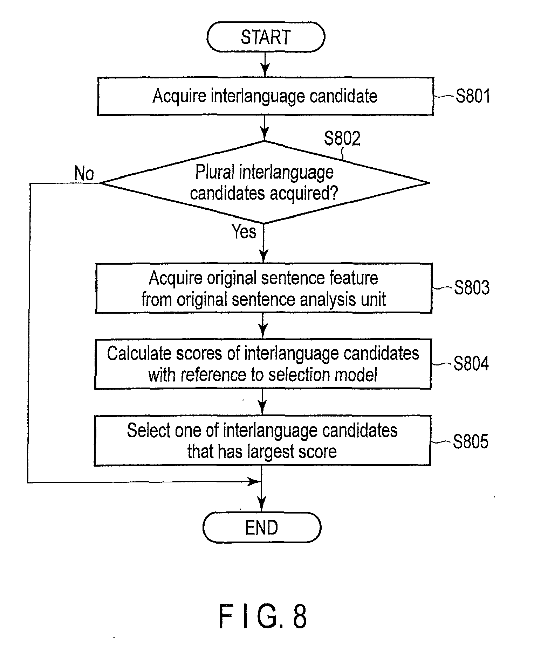

Next, the interlanguage selection process shown in step S702 is explained in detail with reference to FIG. 8.

FIG. 8 shows the procedure of the interlanguage selection process according to the present embodiment. In step S801 of FIG. 8, the interlanguage selection unit 103 acquires interlanguage candidates that are natural languages usable for translation from the original language into the object language from the translation controller 107. The translation controller 107 can determine the interlanguage candidates based on the translation devices 105 contained in the translation engine unit 106. In step S802, the interlanguage selection unit 103 determines whether a plurality of interlanguage candidates are obtained or not. When only one interlanguage candidate is obtained, the interlanguage selection unit 103 selects the interlanguage candidate as an interlanguage and the interlanguage selection process is terminated.

If a plurality of interlanguage candidates are obtained, the process proceeds to step S803. In step S803, the interlanguage selection unit 103 acquires analysis information from the analysis unit 102. The analysis unit 102 performs an analysis process such as morphologic analysis, syntagmatic analysis, and dependence structure analysis that are conventionally used and then generates analysis information.

In step S804, scores of the interlanguage candidates are calculated based on the analysis information and the selection model. As one example, score $Z_l$ of interlanguage candidate I is calculated according to the following equation (1):

$$Z_l = \sum_{i=1}^{N} \phi(f_i) \times w_{l,i} \qquad (1)$$

where $f_i$ indicates a value assigned to original sentence feature #i contained in the analysis information, $w_{l,i}$ indicates the transmission coefficient of interlanguage candidate I with respect to original sentence feature #i, N indicates the number of original sentence features and $\phi(\cdot)$ indicates a given characteristic function.

In step S805, the interlanguage selection unit 103 selects one of the interlanguage candidates having the largest score as an interlanguage. As a result, the interlanguage selection process is terminated.

The interlanguage selection unit 103 may select a specified interlanguage when the analysis unit 102 fails to acquire the original sentence feature, or when the largest score is lower than a preset threshold value. The specified interlanguage may be automatically set by the machine translation apparatus 100, or may be set from the exterior by the user of the machine translation apparatus 100.

Next, the specific example of the machine translation process according to the present embodiment is explained.

A case where the Japanese sentence of "ハンス、お元気ですか？" is input and the sentence is translated into German is explained as an example. English, Chinese, and Korean are assumed as interlanguage candidates usable for translation from Japanese into German, and the selection model stores the transmission coefficients shown in FIG. 3. Also, it is assumed that analysis information shown in FIG. 2 is acquired as the result of analysis of Japanese sentence of "ハンス、お元気ですか？" by the analysis unit 102. In the example of FIG. 2, the values of original sentence features #2, #4, #11 are "1" and the values of the other original sentence features are "0". That is, $f_i = 1$ (i = 2, 4, 11) and $f_i = 0$ (i = 1, 3, 5, 10, 12, ..., N).

The characteristic function $\phi(\cdot)$ shown in Equation (1) is used for converting a value of the original sentence feature into a given numerical value. In this example, since the binary values of "0" and "1" are used, it is assumed that $\phi(f_i) = f_i$. In this case, Equation (1) corresponds to the operation of weighted sum of the transmission coefficients of the selection model with the analysis information used as a weight. If the scores of interlanguage candidates are calculated according to Equation (1), the following result is obtained.

Z (English) = 0.9 + 1.0 + 0.2 = 2.1
Z (Chinese) = 0.7 + 1.0 + 0.2 = 1.9
Z (Korean) = 0.8 + 1.0 + 0.8 = 2.6

As a result, Korean is selected as the interlanguage.

Next, the translation controller 107 translates an original language sentence by use of the translation device 105C that translates Japanese into Korean that is the selected interlanguage.

In this example, an interlanguage sentence of " 한스, 안녕하셨습니까？ " is obtained. "~ 습니까？" in the interlanguage sentence corresponds to a Japanese sentence of "~ですか？ ('~desuka?')" (corresponding to the polite expression of "are you?") and the honorific expression of the original language sentence is naturally maintained in the interlanguage sentence.

Then, the translation controller 107 translates the interlanguage sentence by use of the translation device 105F that translates Korean into German that is the object language.

In this example, an object language sentence of "Wie geht's Ihnen, Hans?" is obtained. Since the interlanguage sentence includes "~ 습니까？", the translation result not containing "Wie geht's dir?", that is a neutral expression in German, but containing "Wie geht's Ihnen?", that corresponds to a more polite expression, can be obtained.

As described above, the machine translation apparatus according to this embodiment selects an interlanguage from interlanguage candidates based on the analysis result of the original sentence and the selection model. Therefore, a translation can be executed by use of the interlanguage that is suitable for translation of the input original sentence and, as a result, a highly accurate translation can be executed.

Instructions in the processing procedure shown in the above embodiment can be executed based on a program that is software. A general-purpose computer system can provide the same effect as the effect of the machine translation apparatus of the above embodiment by previously storing the program and reading the program. The instructions described in the above embodiment are stored in a magnetic disk (flexible disk, hard disk or the like), optical disk (CD-ROM, CD-R, CD-RW, DVD-ROM, DVD±R, DVD±RW or the like), semiconductor memory, or storage medium corresponding thereto as a program that can be executed by a computer. If a storage medium that can be read by a computer or built-in system is used, any storage form can be used. The computer can achieve the same operation as that of the machine translation apparatus of the above embodiment by reading the program from the storage medium and causing a CPU to execute the instruction described in the program based on the program. Of course, when the computer acquires or reads a program, it is possible to acquire or read the program via a network.

Furthermore, an OS (operating system) operated on a computer based on the instruction of the program installed in the computer or built-in system from the storage medium, database management software, MW (middleware) of the network or the like may be used to perform part of each process for realizing the embodiment.

Additionally, the storage medium in the present embodiment is not limited to a medium independently provided from the computer or built-in system; it also includes a storage medium that downloads a program transmitted via LAN or network to store or temporarily store the same.

The number of storage media is not limited to one; cases where the process in the present embodiment may be realized by a plurality of media and where the media are contained in the storage medium of this embodiment are included, and the configuration of the medium can take any configuration.

The computer or built-in system in the present embodiment performs each process in the above embodiment based on the program stored in the storage medium and can be configured by one device formed of a personal computer or microcomputer, a system having devices connected to the network, or the like.

The computer in this embodiment indicates not only a personal computer, but also an operation processing device, microcomputer or the like contained in an information processing device and generally indicates an equipment or device that can realize the function of this embodiment based on the program.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. A machine translation apparatus for translating an original language into an object language via an interlanguage, the apparatus **characterized by** comprising:

    input means (101) for inputting an original sentence of the original language;
    analysis means (102) for analyzing the original sentence to generate analysis information;
    storage means (104) for storing a selection model obtained by modeling characteristics of translation from the original language into a plurality of interlanguage candidates;
    interlanguage selection means (103) for selecting the interlanguage from the plurality of interlanguage candidates based on the analysis information and the selection model;
    translation control means (107) for generating an object language sentence obtained by translating the original sentence into the object language via the interlanguage; and
    output means (108) for outputting the object language sentence.

2. The apparatus according to claim 1, wherein the translation control means (107) controls a first translation device (105) that translates the original sentence into a sentence of the interlanguage and a second translation device (105) that translates the sentence of the interlanguage into the object language.

3. The apparatus according to claim 2, **characterized in that** the interlanguage selection means (103) calculates scores of the plurality of interlanguage candidates based on the analysis information and the selection model and selects one of the plurality of interlanguage candidates having a largest score as the interlanguage.

4. The apparatus according to claim 3, **characterized in that** the analysis information includes at least one value assigned to at least one original sentence feature, and the interlanguage selection means (103) calculates the scores by performing a weighted sum operation on the selection model with the analysis information used as a weight.

5. The apparatus according to claim 4, **characterized in that** the selection model includes at least one transmission coefficient with respect to the at least one original sentence feature for each interlanguage candidate.

6. The apparatus according to claim 4, **characterized in that** the at least one original sentence feature includes information related to at least one of a sentence type, tense, voice, honorific expression, ambiguity of words, clause structure, and character type.

7. The apparatus according to claim 3, **characterized in that** the interlanguage selection means (103) further selects another interlanguage from the plurality of interlanguage candidates, the translation control means (107) generates another object language sentence obtained by translating the original sentence into the object language via the other interlanguage, and the output means (108) arranges and outputs the object language sentence and the other object language sentence in an order in which the scores are higher and outputs comment information.

8. The apparatus according to claim 7, **characterized in that** the comment information includes information indicating whether the analysis information is reflected.

9. The apparatus according to claim 7, **characterized in that** the comment information includes an interlanguage sentence obtained as the result of translation from the original sentence into the interlanguage.

10. The apparatus according to any preceding claim, **characterized by** further comprising a plurality of translation devices (105) configured to respectively translate the original language into the plurality of interlanguage candidates and a plurality of translation devices (105) configured to respectively translate the plurality of interlanguage candidates into the object language.

11. The apparatus according to any of claims 1 to 9, **characterized in that** the translation control means (107) communicates with a plurality of translation devices (105) configured to respectively translate the original language into the plurality of interlanguage candidates and a plurality of translation devices (105) configured to respectively translate the plurality of interlanguage candidates into the object language via a communication network.

12. A machine translation method for translating an original language into an object language via an interlanguage, the method comprising:

    inputting an original sentence of the original language;
    analyzing the original sentence to generate analysis information;
    providing a selection model obtained by modeling characteristics of translation from the original language into a plurality of interlanguage candidates;
    selecting the interlanguage from the plurality of interlanguage candidates based on the analysis information and the selection model;
    generating an object language sentence obtained by translating the original sentence into the object language via the interlanguage; and
    outputting the object language sentence.

13. A computer readable medium including computer executable instructions, wherein the instructions, when executed by a processor, cause the processor to perform a method for translating an original language into an object language via an interlanguage, the method comprising:

    inputting an original sentence of the original language;
    analyzing the original sentence to generate analysis information;
    providing a selection model obtained by modeling characteristics of translation from the original language into a plurality of interlanguage candidates;
    selecting the interlanguage from the plurality of interlanguage candidates based on the analysis information and the selection model;

generating an object language sentence obtained by translating the original sentence into the object language via the interlanguage; and
outputting the object language sentence.

F I G. 1

EP 2 851 809 A2

| Original language: Japanese | Object language: German |
|---|---|
| Original language sentence: "ハンス、お元気ですか？" | |

| Identifier | Feature name | Value |
|---|---|---|
| #1 | Sentence type: Declarative sentence | 0 |
| #2 | Sentence type: Interrogative sentence | 1 |
| #3 | Sentence type: Imperative sentence | 0 |
| #4 | Tense: Present | 1 |
| #5 | Tense: Past | 0 |
| #6 | Tense: Future | 0 |
| #7 | Voice: Active | 0 |
| #8 | Voice: Passive | 0 |
| #9 | Honorific expression: Respect | 0 |
| #10 | Honorific expression: Modesty | 0 |
| #11 | Honorific expression: Politeness | 1 |
| ..... | ..... | ..... |

# FIG. 2

|  | #1 | #2 | #3 | #4 | ..... | #10 | #11 | ..... |
|---|---|---|---|---|---|---|---|---|
| English | 0.9 | 0.9 | 0.9 | 1.0 | ..... | 0.2 | 0.2 | ..... |
| Chinese | 0.7 | 0.7 | 0.7 | 1.0 | ..... | 0.4 | 0.2 | ..... |
| Korean | 0.8 | 0.8 | 0.8 | 1.0 | ..... | 0.8 | 0.8 | ..... |

# FIG. 3

Original sentence (Japanese): "ハンス、お元気ですか?" ⎯ 401

Translated sentence (German): Wie geht's dir, Hans? ⎯ 402

Interlanguage sentence (English): How are you, Hans? ⎯ 403

## F I G. 4

Original sentence (Japanese): "ハンス、お元気ですか?" ⎯ 501

There is a possibility that the sentence
is not translated correctly
〔Honorific expression: Politeness〕 ⎯ 503

Translated sentence candidate (German):
   1: Wie geht's Ihnen, Hans?
   2: Wie geht's dir, Hans? ⎯ 502

## F I G. 5

Original sentence (Japanese): "ハンス、お元気ですか?" ———— 501

There is a possibility that the sentence
is not translated correctly
【Honorific expression: Politeness】 ———— 503

Translated sentence candidate (German):
   1: Wie geht's ihnen, Hans ?
      <Adequate for translation of interlanguage (Korean):
      【Honorific expression: Politeness】>
   2: Wie geht's dir, Hans ?
      <Inadequate for translation of interlanguage (English):
      【Honorific expression: Politeness】> ———— 502

## F I G. 6

START

Input unit: Receive input of original
sentence of original language ——S701

Interlanguage selection unit:
Interlanguage selection process ——S702

Translation controller: Process for translation
from original language into selected interlanguage ——S703

Translation controller: Process for translation
from selected interlanguage into object language ——S704

Output unit: Output translation result ——S705

END

## F I G. 7

START

Acquire interlanguage candidate — S801

S802

No ← Plural interlanguage candidates acquired?

Yes

Acquire original sentence feature from original sentence analysis unit — S803

Calculate scores of interlanguage candidates with reference to selection model — S804

Select one of interlanguage candidates that has largest score — S805

END

F I G. 8